# EUROPÄISCHE PATENTSCHRIFT

(11) **EP 0 999 214 B1**
(45) Veröffentlichungstag und Bekanntmachung des Hinweises auf die Patenterteilung: **08.12.2004**
(21) Anmeldenummer: 99120388.6
(22) Anmeldetag: 13.10.1999
(51) Int. Cl.: C07F 7/18, C07F 7/04

(54) **Verfahren zur Herstellung von chloridarmen oder chloridfreien Alkoxysilanen**
Process for preparing alkoxy silanes with low chlorine content
Procédé de préparation d'alkoxysilanes exempts de chlorure

(30) Priorität: 06.11.1998 DE 19851147; 31.08.1999 DE 19941283
(43) Veröffentlichungstag der Anmeldung: 10.05.2000
(73) Patentinhaber: Degussa AG, 40474 Düsseldorf (DE)
(72) Erfinder: Kropfgans, Frank, Dr., 79618 Rheinfelden (DE); Rauleder, Hartwig, Dr., 79618 Rheinfelden (DE)

(56) Entgegenhaltungen:
- EP-A- 0 282 846
- EP-A- 0 537 858
- EP-A- 0 741 137

## Beschreibung

Die vorliegende Erfindung betrifft ein Verfahren zur Herstellung von Alkoxysilanen, die arm an acidem Chlorid oder im Wesentlichen frei von acidem Chlorid sind.

Es ist bekannt, dass man Alkoxysilane durch Umsetzung der entsprechenden Chlorsilane mit einem Alkohol herstellen kann, zum Beispiel gemäß DE 28 00 017 C2 oder EP 0107 765 B1.

Im Allgemeinen ist man dabei bemüht, eine möglichst vollständige Veresterung und eine gute Produktausbeute zu erzielen. Unerwünscht ist, dass nicht umgesetzte Anteile an Chlorsilan sowie Chlorwasserstoff als so genannte hydrolysierbare bzw. acide Chlorverbindungen - kurz "acides Chlorid" genannt - im Produkt verbleiben. In der Gruppe der Organoalkoxysilane enthalten in der Regel nur die Aminoalkylalkoxysilane neben acidem Chlorid auch Restmengen an nichthydrolysierbaren Chlorverbindungen, wie Chloralkylalkoxysilan, da solche Verbindungen Ausgangsverbindungen bei der Herstellung der Aminoalkylalkoxysilane sind, vgl. EP 0 741 137 A1.

Im Hinblick auf heutige Anwendungen der Alkoxysilane, wie zum Beispiel als Haftvermittler, zur Hydrophobierung in Bautenschutzmitteln, zur Vernetzung von Kunststoffen, zur Modifizierung von Oberflächen, beispielsweise in Glasfaserschlichten, als Einsatzstoffe für weitere Reaktionsstufen, um nur einige Anwendungen zu nennen, ist es daher erforderlich, Produkte bereitzustellen, die einen möglichst geringen Gehalt an acidem Chlorid aufweisen.

Im nachfolgenden Text wird unter einem chloridfreien Alkoxysilan ein Produkt verstanden, das einen Gehalt an acidem Chlorid von weniger als 10 Gew.-ppm aufweist, d. h. im Wesentlichen frei an acidem Chlorid ist. Die Nachweisgrenze für die Bestimmung von acidem Chlorid in Alkoxysilanen liegt heute bei < 1 Gew.-ppm (Bestimmung durch argentometrische Titration in wasserfreier saurer Lösung mit potentiometrischer Endpunkbestimmung - AN-SAA-0411).

EP 0 223 210 A2 lehrt eine Methode zur Reinigung von Alkoxysilanen. die nichthydrolysierbare und hydrolysierbare Chlorverbindungen enthalten, wobei man das Alkoxysilan in Gegenwart von saurem Ton oder einem Schermetallhalogenid erhitzt, anschließend mit einem Neutralisationsmittel, wie metallischem Natrium, metallischem Kalzium, Alkalihydroxid, Natriumcarbonat, Magnesiumoxid, Alkalialkoholat, Ammoniak, organischen Aminen. Alkylenoxiden oder Orthoester, in Kontakt bringt und das Alkoxysilan von den übrigen Komponenten beispielsweise durch Filtration oder Destillation abtrennt. Auch müssen die hierbei anfallenden Filterrückstände vor ihrer Entsorgung als Sondermüll aufwendig mit Lösemittel silanfrei gewaschen werden oder über ein ebenfalls aufwendiges und kostspieliges Verfahren aufgearbeitet und recycliert werden. Ferner ist das Erhitzen besagter Alkoxysilane in Gegenwart von saurem Ton oder einem Schwermetallhalogenid aufwendig, und es kann zu unerwünschten Nebenreaktionen kommen. So ist bekannt, dass Chloralkylalkoxysilane beim Erhitzen in Gegenwart eines Metallhalogenids, wie Eisenchlorid, Aluminiumchlorid, Kupferchlorid, um nur einige zu nennen, unter Freisetzung von HCl und Bildung von Alkenylalkoxysilanen abgebaut werden. Darüber hinaus sind Produktverfärbungen, Mischesterbildung und Kondensationsreaktionen zu beobachten. Auch genügen Alkoxysilane, die nach einem solchen Verfahren erhalten werden, aufgrund von Spuren des eingesetzten Schwermetallhalogenids im Allgemeinen nicht den hohen Anforderungen in der Lebensmittelindustrie, beispielsweise für Kunststoffverpackungen oder Trinkwasserrohre.

Aus DE-OS 25 21 399 geht ein Verfahren zur Herstellung von Aminoalkylsilanen hervor, wobei einer durch Aminierung eines Chloralkylalkoxysilans erhaltene Reaktionsmischung vor der Aufarbeitung eine der im Gemisch enthaltenen Chloralkylsilan- bzw. Chloridmenge äquivalente Menge an Metallalkoholat zugesetzt wird. Bei diesem Herstellverfahren werden Löse- bzw. Verdünnungsmittel, wie Toluol, Hexan oder Alkohol, eingesetzt.

EP 0 282 846 A2 offenbart ein Verfahren zur Herstellung von Alkoxysilanen mit niedrigem Gehalt an Chlorverbindungen durch stufenweise Veresterung von Chlorsilanen mit Alkoholen in flüssiger Phase unter Abziehen des entstehenden Chlorwasserstoffs, wobei man so erhaltene Alkoxysilane, die noch eine geringe Menge Chlorverbindungen enthalten, mit Metallalkoholat, das, bezogen auf den Anteil an Chlorverbindungen, im stöchiometrischen Überschuss zugesetzt wird, bei einer Temperatur im Bereich von 80 bis 200 °C, gegebenenfalls in Gegenwart eines Lösemittels, wie Toluol oder Xylol, umsetzt und das Alkoxysilan beispielsgemäß durch Filtration von den entstandenen Salzen abtrennt. Bei diesem Verfahren sind die langen Reaktionszeiten bei relativ hohen Arbeitstemperaturen wenig vorteilhaft.

Ferner ist gemäß EP 0 486 279 B1 ein den zuvor genannten Verfahren vergleichbares Verfahren zur Entfernung saurer Verunreinigungen aus Alkoxysilanen bekannt, bei dem als Neutralisationsmittel das Metallsalz eines sterisch gehinderten Amins oder ein Alkalialkoholat eines sterisch gehinderten Alkohols bei einer Temperatur bis 80 °C über 1 bis 2 Stunden eingesetzt wird und das neutralisierte Alkoxysilan destilliert. Derartige Neutralisationsmittel sind für den technischen Maßstab nicht in hinreichenden Mengen verfügbar und eine gesonderte, zusätzliche Herstellung des Neutralisationsmittels wäre aufwendig, kostenintensiv und somit aufgrund wirtschaftlicher Überlegungen auszuschließen.

EP 0 532 872 B1 lehrt ebenfalls ein Verfahren zur Reinigung von Alkoxysilanen, die mit hydrolysierbaren Chloratomen verunreinigt sind, wobei man die Alkoxysilane in einem Druckreaktor, gegebenenfalls in Gegenwart eines im Überschuss zugesetzten Neutralisationsmittels, mit einem Alkohol oberhalb des Siedepunktes des verwendeten Alkohols und dem sich dabei einstellenden Druck umsetzt, das dabei gegebenenfalls anfallende Salz abtrennt und den überschüssigen Alkohol durch Abdestillieren aus dem Produkt entfemt. Als Neutralisationsmittel werden hier u. a organische Amine sowie Natriumalkoholate offenbart.

Aus EP 0 563 883 B1 geht ein Verfahren zur Neutralisation saurer Halogenide in Alkoxysilanen hervor, welches als Maßnahmen das Kontaktieren des Alkoxysilans zunächst mit einem Metallalkoholat als Base, die, bezogen auf den Anteil des sauren Halogenids, im stöchiometrischen Überschuss zugesetzt wird, und nachfolgend mit einem sauren Salz, das, bezogen auf den Anteil der restlichen überschüssigen im Alkoxysilan enthaltenen Base, im stöchiometrischen Überschuss eingesetzt wird, vorsieht. Auch hierbei werden die Salze durch Filtration vom Produkt abgetrennt, das gegebenenfalls durch Strippen restlicher Alkoholmengen oder Destillation nachgereinigt werden kann. Darüber hinaus weist EP 0 563 883 B1 auf Probleme hinsichtlich der Farbqualität bei Alkoxysilanen hin, die bei der Aufarbeitung, insbesondere bei der Neutralisation und nachfolgenden Aufarbeitung der Alkoxysilane zu beobachten sind.

Der vorliegenden Erfindung lag die Aufgabe zugrunde, ein einfaches und aus großtechnischer Sicht wirtschaftliches Verfahren bereitzustellen, das es ermöglicht, Alkoxysilane, die arm an acidem Chlorid oder im Wesentlichen frei von acidem Chlorid sind, herzustellen.

Die gestellte Aufgabe wird erfindungsgemäß entsprechend den Angaben der Patentansprüche gelöst.

Überraschenderweise wurde nun gefunden, dass Alkoxysilane, die arm an acidem Chlorid oder im Wesentlichen frei von acidem Chlorid sein sollen, dann in besonders einfacher und wirtschaftlicher Weise zugänglich sind und insbesondere Ammoniak als kostengünstiges Neutralisationsmittel bei der Herstellung von Alkoxysilanen ganz besonders dann geeignet ist, wenn man ein Chlorsilan bzw. ein organofunktionelles Chlorsilan mit einem Alkohol in der Regel bei Normaldruck, d. h. bevorzugt bei Normaldruck ± 0, 5 bar abs., besonders bevorzugt bei Normaldruck ± 0,3 bar abs., in wasser- und lösemittelfreier Phase umsetzt und dabei entstehenden Chlorwasserstoff aus der Produktmischung entfernt, anschließend flüssigen oder gasförmigen Ammoniak zugibt, wobei die eingesetzte Menge an Ammoniak, bezogen auf den Anteil an acidem Chlorid mit Hinblick auf das Alkoxysilan, einem stöchiometrischen Überschuss entspricht, die Ammoniak-haltige Produktmischung bei einer Temperatur zwischen 10 und 50 °C, vorzugsweise zwischen 30 und < 40 °C, behandelt, gegebenenfalls das entstandene Salz vom Rohprodukt trennt sowie das Rohprodukt gegebenenfalls mit einer Base nachbehandelt und das Alkoxysilan durch Destillation aus dem Rohprodukt gewinnt.

Erfindungsgemäß hergestellte Produkte zeichnen sich in hervorragender Weise durch einen Gehalt an acidem Chlorid, der vorzugsweise bei < 5 Gew.-ppm liegt und bis in den Bereich der analytischen Nachweisgrenze für acides Chlorid hineinreicht, aus. Darüber hinaus werden beim erfindungsgemäßen Verfahren Produkte erhalten, die sich durch ihre sehr gute Farbqualität und eine ausgezeichnete Reinheit hervorheben. Insbesondere ist das erfindungsgemäße Verfahren aber auch als großtechnischer Prozess und aufgrund seiner besonderen Wirtschaftlichkeit hervorzuheben.

Gegenstand der vorliegenden Erfindung ist daher ein Verfahren zur Herstellung von Alkoxysilanen, die arm an acidem Chlorid oder im Wesentlichen frei von acidem Chlorid sind, durch
- Umsetzung von einem Chlorsilan mit einem Alkohol in wasser- und lösemittelfreier Phase und Entfernen von dabei entstehendem Chlonwasserstoff aus der Produktmischung,
- anschließende Zugabe von flüssigem oder gasförmigem Ammoniak, wobei die eingesetzte Menge an Ammoniak, bezogen auf den Anteil an acidem Chlorid, einem stöchiometrischen Überschuss entspricht,
- Behandlung der Ammoniak-haltigen Produktmischung bei einer Temperatur zwischen 10 und 50 °C, gegebenenfalls anschließendes Abtrennen des bei der Neutralisation entstandenen Salzes vom Rohprodukt und
- Gewinnung des Alkoxysilans durch Destillation des Rohprodukts.

Das erfindungsgemäße Verfahren wird vorzugsweise diskontinuierlich betrieben. Man kann das vorliegende Verfahren aber auch als kontinuierlichen Prozeß betreiben. Auch betreibt man den vorliegenden Prozess geeigneterweise in flüssiger Phase unter Schutzgas, vorzugsweise wird als Schutzgas Stickstoff verwendet.

Bevorzugte Alkoxysilane des erfindungsgemäßen Verfahrens genügen den allgemeinen Formeln I oder II, 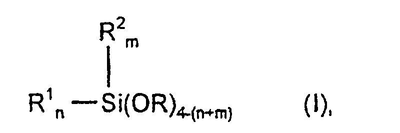 wobei
- R: eine lineare oder verzweigte Alkylgruppe mit 1 bis 4 C-Atomen oder eine Glykolethereinheit gemäß der Formel -[(CH₂)_{y}-O]_{z}-R³ darstellt, worin y gleich 2, 4, 6 oder 8, z gleich 1, 2, 3 oder 4 und R³ eine lineare oder verzweigte Alkylgruppe mit 1 bis 8 C-Atomen sind,
- R¹: eine lineare, verzweigte oder cyclische Alkylgruppe mit 1 bis 20 C-Atomen oder eine lineare, verzweigte oder cyclische Chloralkylgruppe mit 1 bis 20 C-Atomen oder eine lineare, verzweigte oder cyclische Alkenylgruppe mit 2 bis 10 C-Atomen bedeutet,
- R²: eine lineare oder verzweigte Alkylgruppe mit 1 bis 4 C-Atomen darstellt und
- n: gleich 0 oder 1 oder 2 ist, m gleich 0 oder 1 und (n+m) gleich 1 oder 2 oder 3 sind,
sowie

Si(OR⁴)₄ (II),

wobei
- R⁴: eine lineare oder verzweigte Alkylgruppe mit 1 bis 8 C-Atomen oder eine Glykolethereinheit gemäß der Formel -[(CH₂)_{y}-O]_{z}-R⁵ darstellt, worin
y gleich 2, 4, 6 oder 8, z gleich 1, 2, 3 oder 4 und R⁵ eine lineare oder verzweigte Alkylgruppe mit 1 bis 8 C-Atomen sind.

Beim vorliegenden Verfahren kann man das Alkoxysilan durch die Umsetzung eines Chlorsilans, wie zum Beispiel 2-Chlorethyltrichlorsilan, Vinylmethyldichlorsilan, Allyltrichlorsilan, 3-Allyloxypropyltrichlorsilan, Butyltrichlorsilan, Pentyltrichlorsilan, Cyclopentyltrichlorsilan, Cyclopentylmethyldichlorsilan, Phenyltrichlorsilan, Cyclohexyltrichlorsilan, Octylmethyldichlorsilan, Dodecyltrichlorsilan, Benzyltrichlorsilan, Benzylmethyldichlorsilan, 2-Phenylethyltrichlorsilan oder Diphenyldichlorsilan oder besonders bevorzugt Tetrachlorsilan, Methyltrichlorsilan, Dimethyldichlorsilan, Trimethylchlorsilan, Ethyltrichlorsilan, 3-Chlorpropyltrichlorsilan, 3-Chlorpropylmethyldichlorsilan, Cyclohexylmethyldichlorsilan, Vinyltrichlorsilan, Propyltrichlorsilan, Propylmethyldichlorsilan, Isobutyltrichlorsilan, Amyltrichlorsilan, Octyltrichlorsilan, Hexadecyltrichlorsilan sowie Hexadecylmethyldichlorsilan, beispielsweise mit einem einwertigen primären Alkohol mit 1 bis 20 C-Atomen, wie zum Beispiel Methanol, Ethanol, Propanol, Butanol, oder mit einem Monoether von Polyalkylenglykolen, wie Methyl-, Ethyl-, Propyl- oder Butylglykol, oder mit einem Di-, Tri-, Tetramethylenglykolmonoethyl-, -ethyl-, -propyl- oder -butylether, oder mit einem zweiwertigen aliphatischen Alkohol, wie Ethylenglykol, 1,2-Propylenglykol, 1,2-Butylenglykol, oder einem Diol mit 3 bis 12 C-Atomen, wobei die Kohlenstoffkette gradkettig oder verzweigt sein kann, - um nur einige Alkohole zu nennen - unter Freisetzung von Chlorwasserstoff herstellen.

Im Allgemeinen erfolgt die Umsetzung des Chlorsilan mit dem Alkohol unter Rückflussbedingungen. In einigen Fällen, wie beispielsweise beim Halogenorganoalkoxysilanen, gestaltet sich die Veresterung schwieriger. In der Regel führt man die Veresterung beim vorliegenden Verfahren bei eine Temperatur im Bereich von 30 bis 200 °C unter Normaldruck ± 0, 5 bar abs. durch. Geeigneterweise führt man die Umsetzung bei einer niedrigeren Temperatur durch, vorzugsweise bei einer Temperatur im Bereich zwischen 40 und 120 °C, besonders vorzugsweise von 50 bis 90 °C, ganz besoners vorzugsweise von 60 bis 80°C.

Zur Entfernung des bei der Umsetzung von Chlorsilan und Alkohol entstehenden Chlorwasserstoffs setzt man beim erfindungsgemäßen Verfahren vorzugsweise Alkohol in flüssiger Form fortwährend zu und zieht gleichzeitig einen nicht umgesetzten Anteil des eingesetzten Alkohols als Gasphase über Kopf ab, sodass der eingesetzte Alkohol zusätzlich als "HCI-Stripper" dient. Hierbei kann auch mit vermindertem Druck gearbeitet werden. Durch diese vergleichsweise einfache, aber beim vorliegenden Verfahren sehr wirkungsvolle Verfahrensweise des HCl-Strippens kann so beim erfindungsgemäßen Verfahren eine nahezu vollständige Veresterung erzielt und dadurch die Umsätze in vorteilhafter Weise auf Werte bis 99,9 % gesteigert werden.

Insbesondere setzt man beim erfindungsgemäßen Verfahren als Alkohol Methanol, Ethanol, n-Propanol, i-Propanol, Methylglykol, Ethylglykol oder eine Mischung aus mindestens zwei der zuvor genannten Alkohole ein.

Nach dem erfindungsgemäßen Verfahren werden nachfolgend aufgeführte Alkoxysilane besonders bevorzugt hergestellt:
Tetramethoxysilan, Tetraethoxysilan, Tetrapropoxysilan, Methylglykolorthosilicat, Ethylglykolorthosilicat, Methyltrimethoxysilan, Methyltriethoxysilan, Dimethyldimethoxysilan, Dimethyldiethoxysilan, Ethyltrimethoxysilan, Ethyltriethoxysilan, 2-Chlorethyltriethoxysilan, Vinyltrimethoxysilan, Vinyltriethoxysilan, Vinylmethyldiethoxysilan, Vinyltris(2-methyloxyethoxy)silan, Phenyltrimethoxysilan, 2-Phenylethyltrimethoxysilan, Diphenyldimethoxysilan, Propyltrimethoxysilan, Propyltriethoxysilan, 3-Chlorpropyltrimethoxysilan, 3-Chlorpropyltriethoxysilan, Propylmethyldimethoxysilan, Propylmethyldiethoxysilan, 3-Chlorpropylmethyldimethoxysilan, 3-Chlorpropylmethyldiethoxysilan, isobutyltrimethoxysilan, Isobutyltriethoxysilan, Amyltrimethoxysilan, Amyltriethoxysilan, Octyltrimethoxysilan, Octyltriethoxysilan, Cyclohexyltrimethoxysilan, Cyclohexylmethyldimethoxysilan, Hexadecyltrimethoxysilan, Hexadecyltriethoxysilan.

Bei einem diskontinuierlich geführten, erfindungsgemäßen Verfahren kann man das Produktgemisch nach der Veresterung zunächst vorneutralisieren. Hierzu lässt man das Produktgemisch nach der Veresterung vorzugsweise auf eine Temperatur zwischen 10 und 50 °C abkühlen und gibt Ammoniak unter guter Durchmischung zu, wobei Ammoniak geeigneterweise in einem stöchiometrischen Überschuss, bezogen auf den Anteil an acidem Chlorid im Produktgemisch mit Hinblick auf das Alkoxysilan, eingesetzt wird. Nicht verbrauchter Ammoniak kann unter vermindertem Druck aus dem Produktgemisch abgezogen und das entstandene Ammoniumsalz abgetrennt werden, beispielsweise durch Druckfiltration. Eine Vorneutralisation führt man geeigneterweise dann durch, wenn mehr als 1 Gew.-% acides Chlorid, bezogen auf das Alkoxysilan, im Produktgemisch nach Veresterung enthalten ist. Der Einsatz von Ammoniak als Neutralisationsmittel ist auch besonders vorteilhaft, da Ammoniak eine vergleichsweise mild wirkende Base bzw. Nukleophil ist.

Es wurde ferner gefunden, dass durch eine Neutralisation des aciden Chlorids in Alkoxysilanen, welche bei höherer Temperatur oder bereits gleich bei Veresterung des Chlorsilans durchgeführt wird, Nebenreaktionen auftreten können und die Produktausbeute deutlich schmälern.

Vor Beginn der Gewinnung des chloridarmen bzw. im Wesentlichen chloridfreien Alkoxysilans erfolgt daher beim erfindungsgemäßen Verfahren die Ammoniak-Zugabe und Behandlung der aus der Veresterung stammenden Produktmischung, die in der Regel einen Gehalt von weniger als 1 Gew. -% acides Chlorid enthält, wobei man die Zugabe von Ammoniak zur Produktmischung geeigneterweise bei einer Temperatur im Bereich zwischen 10 und 50 °C durchführt. Insbesondere erfolgt das Zusammenbringen von Produktmischung und Ammoniak sowie die nachfolgende Behandlung der Produktmischung unter guter Durchmischung, beispielsweise unter Rühren. Vorzugsweise setzt man dabei Ammoniak in einem stöchiometrischen Überschuss, besonders vorzugsweise in einem bis zu 5fachen molaren Überschuss, bezogen auf den Anteil an acidem Chlorid im Produktgemisch, ein. Geeigneterweise leitet man den Ammoniak über ein Tauchrohr ein, wobei sich dessen Auslass vorzugsweise unterhalb des Flüssigkeitsspiegels der Produktmischung im Reaktionsraum befindet.

Beim erfindungsgemäßen Verfahren führt man die Behandlung der Ammoniak-haltigen Produktmischung vorzugsweise bei einem Druck im Bereich von Normaldruck bis hin zu 1,5 bar abs. durch. Geeigneterweise behandelt man beim erfindungsgemäßen Verfahren das Ammoniak-haltige Produktgemisch über 10 Minuten bis 8 Stunden. Ferner führt man die Behandlung des besagten Produktgemischs bevorzugt bei einer Temperatur zwischen 10 und 40 °C, besonders vorzugsweise zwischen 30 bis < 40 °C, durch. Nachfolgend kann man das Ammoniak-haltige Produktgemisch unter vermindertem Druck entgasen. Die Entgasung kann aber auch in einer Destillationsstufe erfolgen.

Zur Gewinnung des chloridarmen bzw. im Wesentlichen chloridfreien Alkoxysilans aus dem so behandelten Produktgemisch kann man aber auch das Ammoniumchlorid-haltige Rohprodukt zunächst filtrieren und anschließend das Filtrat destillieren. Bevorzugt besitzt das Rohprodukt bei der Filtration eine Temperatur von 5 bis 30 °C, insbesondere 10 bis 20 °C. Beim erfindungsgemäßen Verfahren kann man zur Gewinnung des chloridarmen bzw. im Wesentlichen chloridfreien Alkoxysilans aber auch das Ammoniak- bzw. Ammoniumchlorid-haltige Rohprodukt destillativ aufarbeiten.

Geeigneterweise führt man dabei die Destillation unter vermindertem Druck durch, dabei kann die Sumpftemperatur den Erfordernissen des jeweiligen Alkoxysilans angepasst werden, wobei das Reinprodukt geeigneterweise über Kopf der Kolonne entnommen wird. Gegebenenfalls kann man das Reinprodukt auch über eine Kurzweg- oder Dünnschichtdestillation gewinnen.

Ein besonderer Vorteil insbesondere im Hinblick auf die Wirtschaftlichkeit des erfindungsgemäßen Verfahrens ist ferner, dass man vorzugsweise das Ammoniumchlorid im Wesentlichen mit dem Destillatrückstand der Destillation austrägt und man eine zusätzliche Filtration einsparen kann.
Ferner wurde gefunden, dass in einigen der in besagter Weise neutralisierten Produktgemische, d. h. im Rohprodukt, und ferner auch in einigen wenigen der destillierten Produkte noch "Spuren" an acidem Chlorid nachgewiesen werden konnten.

Im Bestreben um einen möglichst geringen Restgehalt an acidem Chlorid im Reinprodukt - insbesondere bis hin zur Grenze der Nachweisbarkeit von acidem Chlorid in Alkoxysilanen - ist es ferner besonders vorteilhaft, wenn man das im erfindungsgemäßen Verfahren anfallende Rohprodukt vor der destillativen Aufarbeitung mit einer Base nachbehandelt. Hierzu wird das besagte Rohprodukt vorzugsweise in die Blase der Destillationskolonne überführt, zunächst die im Rohprodukt noch vorhandene Restmenge an acidem Chlorid bestimmt, dem Rohprodukt eine hierzu äquivalente Menge an Alkalialkoholat oder Erdalkalialkoholat zugegeben, das so erhaltene Gemisch unter guter Durchmischung bei einer Temperatur im Bereich von 10 bis 40 °C nachbehandelt und anschließend das so nachbehandelte Rohprodukt zur Gewinnung des Alkoxysilans destillativ aufarbeitet. Besonders vorzugsweise führt man die Nachbehandlung des Rohprodukts bei 30 bis < 40 °C über 10 bis < 60 Minuten, ganz besonders vorzugsweise bei 32 bis 38 °C über 15 bis 45 Minuten, durch. Bevorzugt setzt man beim erfindungsgemäßen Verfahren zur Nachbehandlung des Rohprodukts Natriummethanolat oder Natriumethanolat, das geeigneterweise in einer zum Alkoholat korrespondierenden alkoholischen Lösung vorliegt, ein. Auch die Destillation des so nachbehandelten Rohprodukts kann im Hinblick auf die Farbzahl und Klarheit des Endprodukts in Gegenwart der durch die Nachbehandlung des Rohprodukts angefallenen Neutralisationsprodukte unbeschadet durchgeführt werden. So hergestellte Alkoxysilane weisen im Allgemeinen dann in vorteilhafter Weise einen Gehalt an acidem Chlorid von weniger als 10 Gew.-ppm, vorzugsweise < 5 Gew.-ppm, besonders vorzugsweise bis hin zur Nachweisgrenze, auf.

Nach dem erfindungsgemäßen Verfahren erhaltene Produkte zeichnen sich im Allgemeinen durch eine hohe Produktreinheit (laut gaschromatographischer Analyse: > 99 %), einen Gehalt an acidem Chlorid < 10 Gew.-ppm - bis hin zur Nachweisgrenze, eine ausgezeichnete Lagerstabilität, ein optimiertes und reproduzierbares Hydrolyseverhalten sowie besonders wirtschaftliche Herstellkosten aus. Die erfindungsgemäß erhältlichen Produkte sind in hervorragender und vorteilhafter Weise wasserklare Produkte mit einer Farbzahl APHA < 5 und besitzen somit und auch infolge nur minimalster Verunreinigungen ein breites Einsatzspektrum.

Die vorliegende Erfindung wird durch die folgenden Beispiele näher erläutert.

### Beispiel 1

### Vergleichsbeispiel A:

### Herstellung von 3-Chlorpropyltrimethoxysilan (CPTMO) gemäß EP 0 282 846 A2

In einem diskontinuierlichen Veresterungsreaktor werden 212 kg (1 kmol) 3-Chlorpropyltrichlorsilan (CPTCS) bei 50 bis 60 °C vorgelegt und insgesamt 110 kg (3,4 kmol) Methanol innerhalb von 5 Stunden zudosiert. Das Methanol wird mittels eines Eintauchrohres unterhalb des Flüssigkeitsspiegels zugegeben. Nach Abschluss der Methanolzugabe wird das Rohprodukt weitere 2 Stunden bei ca. 80 °C am Rückfluss gehalten. Das bei der Reaktion entstehende HCl wird durch einen trockenen N₂-Strom aus dem Reaktionsgemisch ausgetrieben. Anschließend wird der gebildete Rohester mit ca. 200 kg Toluol verdünnt, bei 80 °C mit Natriummethylat-Lösung (ca. 20 Mol-% Überschuss, bezogen auf 1 Mol hydrolysierbares Chlor im Produkt) neutralisiert und auf Raumtemperatur abgekühlt. Gebildetes Natriumchlorid wird abfiltriert und das Filtrat destillativ (Vakuumdestillation) aufgearbeitet.
Nach Abtrennung der Leichtsieder (Methanol, Toluol) erhält man ca. 161 kg (81 %) CPTMO mit einer gaschromatographischen Reinheit von ca. 94 Gew.-% CPTMO und ca. 6 Gew.-% 3-Methoxypropyltrimethoxysilan (MOPTMO) sowie einem Gehalt an hydrolysierbarem Chlorid von ca. 25 ppm. Gebildeter Destillationsrückstand (ca. 40 kg, bestehend aus Siloxanen und Oligomeren) wird verworfen.

### Vergleichsbeispiel B:

### Herstellung von CPTMO gemäß EP 0 532 872 B1

Das gemäß Beispiel 1, Vergleichsbeispiel A, hergestellte, jedoch nicht neutralisierte und mit Toluol verdünnte CPTMO-Rohprodukt (Gehalt an hydrolysierbarem Chlorid ca. 4,8 Gew.-%) wird gemäß den Angaben in EP 0 532 872 B1 in einem Druckautoklaven mit Methanol und Ammoniak (ca. 10 Mol-% Überschuss, bezogen auf den Gehalt an hydrolysierbarem Chlorid) bei ca. 80 °C eine Stunde lang behandelt. Das abgekühlte Rohprodukt wird mittels Druckfiltration (Seitz-Filter) vom ausgefallenen Ammoniumchlorid befreit (Restgehalt an hydrolysierbarem Chlorid ca. 85 ppm) und mittels fraktionierter Destillation im Vakuum gereinigt. Nach der Destillation erhält man ca. 85 Gew.-% CPTMO mit einer gaschromatographischen Reinheit > 98 Gew.-%, MOPTMO-Gehalt < 0,5 Gew.-% und einem Anteil an hydrolysierbarem Chlorid von 46 ppm.

### Beispiel C:

### Herstellung von CPTMO

In einem diskontinuierlichen Veresterungsreaktor werden 212 kg (1 kmol) 3-Chlorpropyltrichlorsilan (CPTCS) bei 50 bis 60 °C vorgelegt und mit insgesamt 110 kg (3,4 kmol) Methanol innerhalb von 5 Stunden zur Reaktion gebracht. Das Methanol wird mittels eines Tauchrohres unterhalb des Flüssigkeitsspiegels zudosiert. Im Zuge der Methanoldosierung wird die Resktorinnentemperatur durch ständiges Nachheizen so gewählt, dass der Rohester-Ansatz ständig am Rückfluss gehalten wird, jedoch die Innentemperatur 110 bis 115°C nicht überschreitet. Zur Entfernung des gebildeten HCl wird die gesamte Umsetzung bei leichtem Unterdruck (ca. 100 mbar) und gleichzeitigem Abdestillieren von nicht umgesetztem Methanol (HCl-Strippalkohol) durchgeführt. Der Stripp-Prozess wird jedoch erst begonnen, wenn ca. 60 % der stöchiometrischen Methanolmenge verbraucht sind. Für das Strippen werden zusätzlich weitere 40 kg Methanol in die siedende Reaktionsmischung zudosiert, die jedoch zusammen mit dem gebildeten HCl sofort wieder aus dem Reaktor abdestilliert und im nächsten Reaktionsansatz wieder eingesetzt werden.

Nach Abschluss der Methanoldosierung wird der saure Ansatz auf Raumtemperatur abgekühlt und mittels Titration mit 0,1 n NaOH der Gehalt an hydrolysierbarem Chlorid bestimmt (Restchloridgehalt ca. 0,5 bis 1,0 ml 0,1 n NaOH). Die Neutralisation erfolgt üblicherweise direkt im Synthesereaktor durch Einleiten von gasförmigem Ammoniak unter die Flüssigkeitsoberfläche (Tauchrohr) sowie unter ständigem Rühren und Kühlung des Reaktionsgemisches auf ca. 30 bis 40 °C.

Das Ende der Neutralisation wird durch einen Verbrauch von ca. 5 ml 0,1 n HCl während der Titration angezeigt. Nach weiterer Abkühlung des Rohprodukts auf ca. 10 bis 20 °C wird das ausgefallene Ammoniumchlorid mittels Druckfiltration abgetrennt und der Filterkuchen gegebenenfalls mit wenig Methanol gewaschen und mit gasförmigem Stickstoff getrocknet.

Die gemeinsamen Filtrate werden in die Destillationsblase überführt und der Restgehalt an hydrolysierbarem Chlorid mittels argentometrischer Titation bestimmt. Je nach der gewünschten Endproduktqualität kann das Rohprodukt direkt destilliert werden oder noch gelöstes hydrolysierbares Chlorid mittels stöchiometrischer Zugabe von Natriummethylat-Lösung (30 bis 40 °C, 30 Minuten Nachneutralisation unter Rühren) in Natriumchlorid überführt werden.

Nach Abschluss der Neutralisation wird das Rohprodukt mittels fraktionierter Destillation im Vakuum von überschüssigem Ammoniak befreit, gereinigt und zurückbleibendes Salz mit dem Destillationsrückstand (ohne weitere Filtration) ausgetragen.

Man erhält ca. 95 Gew.-% CPTMO mit einer GC-Reinheit > 99 %, MOPTMO-Gehalt < 0,1 % und einem Gehalt an hydrolysierbarem Chlorid < 10 ppm (Einsatz von NH₃ als Neutralisationsmittel).

Beim Einsatz von Ammoniak-Gas und anschließender Nachbehandlung mit Natriummethylat-Lösung werden ca. 95 Gew.-% CPTMO mit einer GC-Reinheit von 99 %, MOPTMO-Gehalt < 0,3 % und einem Gehalt an hydrolysierbarem Chlorid < 5 ppm erhalten.

### Beispiel 2

### Vergleichsbeispiel A:

### Herstellung von Vinyltriethoxysilan(VTEO) gemäß EP 0 282 846 A2

Gemäß der im Beispiel 1, Vergleichsbeispiel A, dargestellten Verfahrensweise werden 161,5 kg (1 kmol) Vinyltrichlorsilan (VTC) mit insgesamt 152 kg (3,3 kmol) Ethanol umgesetzt und mit Natriummethylat-Lösung (21-%ig in Ethanol) in 20 Mol-% Überschuss (bezogen auf 1 Mol hydrolysierbares Chlorid im Rohprodukt) neutralisiert und nach Filtration destillativ aufgearbeitet.

Man erhält ca. 127 kg (86 %) VTEO mit einer GC-Reinheit von 97,5 %, Tetaethoxysilan-Gehalt 2 500 ppm, Gehalt an hydrolysierbarem Chlorid von 17 ppm und einer Farbzahl von 10 APHA.

### Vergleichsbeispiel B:

### Herstellung von VTEO gemäß EP 0 532 872 B1

Gemäß der im Beispiel 1, Vergleichsbeispiel B, dargestellten Verfahrensweise wird gemäß Beispiel A hergestelltes, jedoch nicht neutralisiertes VTEO-Rohprodukt (Gehalt an hydrolysierbarem Chlorid ca. 2,1 Gew.-%) in einem Druckautoklaven mit Ethanol und Ammoniak (ca. 10 Mol-% Überschuss an NH₃, bezogen auf Gehalt an hydrolysierbarem Chlorid) bei 100 °C eine Stunde lang behandelt. Nach Filtration und Destillation erhält man ca. 88,5 Gew.-% VTEO mit einer GC-Reinheit von 97,8 %, Tetramthoxysilan-Gehalt < 800 pmm, Gehalt an hydrolysierbarem Chlorid von 64 ppm und einer Farbzahl von 5 APHA.

### Beispiel C:

### Herstellung von VTEO

Gemäß der in Beispiel 1, Beispiel C, dargestellten Verfahrensweise werden 161,5 kg (1,0 kmol) VTC mit insgesamt 152 kg (3,3 kmol) Ethanol unter Anwendung des Strippverfahrens umgesetzt und der auf Raumtemperatur abgekühlte Reaktionsansatz mittels gasförmigem Ammoiak unter ständiger Kühlung neutralisiert. Das Neutralisationsende wird durch einen Verbrauch von ca. 5 ml 0,1 n HCI bei der Titration angezeigt.

Nach Abtrennung des ausgefallenen Ammoniumchlorids mittels Druckfiltration (analog Beispiel 1, Beispiel C) wird das Rohprodukt mittels fraktionierter Destillation von überschüssigem Ammoniak befreit, gereinigt und zurückbleibendes Salz mit dem Destillationsrückstand ausgetragen. Nach destillativer Reinigung erhält man ca. 91 Gew.-% VTEO mit einr Reinheit > 99 %. Tetraethoxysilan-Gehalt < 500 ppm, Farbzahl < 5 APHA und hydrolysierbarem Chlorid < 10 ppm (Einsatz von Ammoniak). Bei kombinierter Verwendung von Ammoniak und anschließender Nachbehandlung mit Nariumethylat-Lösung in der Destillationsblase kann bei gleicher Ausbeute und GC-Reinheit der Gehalt an hydrolysierbarem Chlorid auf < 1 ppm reduziert werden.

### Beispiel D:

### Kontinuierliche Herstellung von VTEO

In einer kontinuierlichen Veresterungsanlage, bestehend aus Reaktor- und Vorlaufkolonne werden gleichzeitig ca. 100 kg/h Vinyltrichlorsilan und 80 bis 90 kg/h Ethanol in die Reaktorkolonne bei ca. 60 °C und Normaldruck eindosiert und dort zur Reaktion gebracht. Gebildeter Chlorwasserstoff wird über den Kolonnenkopf abgezogen, das stark saure Silanester-Rohprodukt (Acidität ca. 5 000 ppm) verlässt die Reaktorkolonne im Sumpfteil und wird mittels Förderpumpe in eine zweite Veresterungskolonne (Vorlaufkolonne) eindosiert. In der Vorlaufkolonne wird der Anteil noch nicht vollständig umgesetzter Chlorsilane (ca. 5 000 ppm) durch zusätzliche Zugabe einer kleinen Menge Ethanol (ca. 10 bis 20 kg) nachverestert und im Rohprodukt noch gelöste "HCl bei Siedetemperatur des Rohprodukts (ca. 80 bis 90 °C) über den Kopf der Vorlaufkolonne ausgeschleust und erneut in die Reaktorkolonne eindosiert. Das desorbierte Rohprodukt verlässt die Vorlaufkolonne über den Sumpfteil und wird nach Abkühlung über mehrere Wärmetauscher in einen Rohproduktbehälter abgepumpt. Der so hergestellte Rohester zeichnet sich durch eine hohe GC-Reinheit und geringe Restacidität aus (Acidität maximal 200 ppm, VTEO-Gehalt > 98 %, Silocangehalt < 1 %, Ethanolgehalt < 1 %).

Das VTEO-Rohprodukt wird analog zum Beispiel C mit gasförmigem Ammoniak neutralisiert, filtriert und gegebenenfalls nach Behandlung mit Natriumethylat-Lösung mittels fraktionierter Vakuumdestillation gereinigt (kontinuierliche oder diskontinuierliche Destillation). Beim Einsatz von Ammoniak erhält man ca. 93 Gew.-% VTEO mit einer GC-Reinheit > 99 %, Tetaethoxysilangehalt < 500 ppm, Farbzahl < 5 APHA und Gehalt an hydrolysierbarem Chlorid < 10 ppm.

Beim Einsatz von Ammoniak und Natriumethylat-Lösung kann bei gleicher Ausbeute und GC-Reinheit der Gehalt an hydrolysierbarem Chlorid auf < 1 ppm reduziert werden.

### Beispiel 3

### Vergleichsbeispiel A:

### Herstellung von Hexadecyltrimethoxysilan gemäß EP 0 282 846 A2

Gemäß der in Beispiel 1, Vergleichsbeispiel A, dargestellten Verfahrensweise werden 360 kg (1 kmol) Hexadecyltrichlorsilan mit insgesamt 110 kg (3,4 kmol) Methanol umgesetzt und mit Natriummethylat-Lösung (30-%ig in Methanol) in 20 Mol-% Überschuss (bzw. auf 1 Mol hydrolysierbares Chlorid im Rohprodukt) neutralisiert und nach Filtration destillativ aufgearbeitet. Man erhält ca. 280 kg (81 %) Hexadecyltrimethoxysilan mit einer GC-Reinheit von 98,5 % (Isomerengemisch), Farbzahl 10 APHA und hydrolysierbarem Chlorid von 12 ppm.

### Vergleichsbeispiel B:

### Herstellung von Hexadecyltrimethoxysilan gemäß EP 0 532 872 B1

Gemäß der im Beispiel 1, Vergleichsbeispiel B, dargestellten Verfahrensweise wird gemäß Beispiel 3, Vergleichsbeispiel A, hergestelltes, jedoch nicht neutralisiertes Rohprodukt (Gehalt an hydrolysierbarem Chlorid ca. 1,8 Gew.-%) in einem Druckautoklaven mit Methanol und Ammoniak (ca. 10 Mol-% Überschuss an NH₃, bezogen auf den Gehalt an hydrolysierbarem Chlorid) bei ca. 100 °C eine Stunde lang behandelt. Nach Filtration und Destillation erhält man ca. 86 % Hexadecyltrimethoxysilan mit einer GC-Reinheit von 98,4 % (Isomerengemisch), Farbzahl < 10 APHA und hydrolysierbarem Chlorrid von 47 ppm.

### Beispiel C:

### Herstellung von Hexadecyltrimethoxysilan

Gemäß der in Beispiel 1, Beispiel C, dargestellten Verfahrensweise werden 360 kg (1 kmol) Hexadecyltrichlorsilan mit insgesamt 100 kg (3.1 kmol) Methanol während einer Dosierzeit von 12 Stunden umgesetzt und mit gasförmigem Ammoniak bei Raumtemperatur neutralisiert. Der Neutralisationsendprodukt wird bei 5 bis 7 ml 0,1 n HCl erreicht (Titration). Nach Abtrennung des gebildeten Ammoniumchlorids wird der Rohester mittels fraktionierter Destillation im Vakuum gereinigt.

Beim alleinigen Einsatz von Ammoniak erhält man ca. 94 Gew.-% Hexadecyltrimethoxysilan mit einer GC-Reinheit > 99 % (Isomerengemisch), Farbzahl < 5 APHA und hydrolysierbarem Chlorid von 9 ppm.

Beim gleichzeitigen Einsatz von Ammoniak und Natriummethylat-Lösung kann bei nahezu gleicher Ausbeute und GC-Reinheit der Gehalt an hydrolysierbarem Chlorid auf < 1 ppm reduziert werden.

### Beispiel 4

### Vergleichsbeispiel A:

### Herstellung von Tetra-(2-methoxyethoxy)silan (CM) gemäß EP 0 282 846 A2

Gemäß der in Beispiel 1, Vergleichsbeispiel A, dargestellten Verfahrensweise werden 170 kg (1 kmol) Tetrachlorsilan mit insgesamt 335 kg (4 kmol) Methylglykol umgesetzt und mit Natriummethylat-Lösung (30-%ig in Methanol) in 20 Mol-% Überschuss (bezogen auf 1 Mol hydrolysierbares Chlorid im Rohprodukt) neutralisiert und durch Filtration mit anschließender Destillation aufgearbeitet.

Man erhält ca. 284 kg (86,5 %) Tetra-(2-methoxyethoxy)silan mit einer GC-Reinheit von 97,3 %, Gehalt an 2-Chlorethoxy-tris-(2-methoxyethoxy)silan 1,9 %, Farbzahl 15 APHA und hydrolysierbarem Chlorid von 27 ppm.

### Vergleichsbeispiel B:

### Herstellung von Tetra-(2-methoxyethoxy)silan gemäß EP 0 532 872 B1

Gemäß der in Beispiel 1, Vergleichsbeispiel B, dargestellten Verfahrensweise wird gemäß Beispiel 4, Vergleichsbeispiel A, hergestelltes, jedoch nicht neutralisiertes Rohprodukt (Gehalt an hydrolysierbarem Chlorid ca. 2,1 Gew.-%) in einem Druckautoklaven mit Methylglykol und Ammoniak (ca. 10 Mol-% Überschuss an NH₃, bezogen auf den Gehalt an hydrolysierbarem Chlorid) bei ca. 80 °C eine Stunde lang behandelt. Nach Filtration und Destillation erhält man ca. 88 Gew.-% Tetra-(2-methoxyethoxy)silan mit einer GC-Reinheit von 97,8 %, Gehalt an 2-Chlorethoxy-tris-(2-methoxyethoxy)silan 0.85 %, Farbzahl 10 APHA und hydrolysierbarem Chlorid von 61 ppm.

### Beispiel C:

### Herstellung von Tetra-(2-methoxyethoxy)silan

Gemäß der im Beispiel 1, Beispiel C, dargestellten Verfahrensweise werden 170 kg (1 kmol) Tetrachlorsilan mit insgesamt 335 kg (4,4 kmol) Methylglykol unter Anwendung des Strippverfahrens umgesetzt und mit gasförmigem Ammoniak bei Raumtemperatur neutralisiert (Endpunkt der Neutralisation bei ca. 4 ml 0,1 n HCl). Nach Abtrennung des gebildeten Ammoniumchlorids (Druckfiltration) wird der Rohester mittels franktionierter Vakuumdestillation gereinigt. Nach destillativer Aufarbeitung erhält man ca. 91 Gew.-% Tetra-(2-methoxyethoxy)silan mit einer GC-Reinheit > 99 %, Farbzahl < 5 APHA, Gehalt an 2-Chlorethoxy-tris-(2-methoxyethoxy)silan < 0,4 % und hydrolysierbarem Chlorid von 10 ppm. Beim zusätzlichen Einsatz von Natriumethylat-Lösung vor Destillationsbeginn kann bei gleicher GC-Reinheit und Ausbeute der Gehalt an hydrolysierbarem Chlorid auf < 1 ppm reduziert werden.

### Beispiel D:

### Kontinuierliche Herstellung von Tetra-(2-methoxyethoxy)silan

In einer kontinuierlichen Veresterungsanlage, bestehend aus Vorlauf- und Reaktorkolonne werden gleichzeitig ca. 60 kg/h Tetrachlorsilan und 120 bis 130 kg/h Methylglykol in die Reaktorkolonne bei ca. 55 °C und Normaldruck eindosiert und dort zur Reaktion gebracht. Gebildeter Chlorwasserstoff wird über den Kolonnenkopf abgezogen, das stark saure Silanester-Rohprodukt verläßt die Reaktorkolonne im Sumpfteil und wird mittels einer geeigneten Förderpumpe in einer zweite Veresterungskolonne (Vorlaufkolonne) eindosiert. In der Vorlaufkolonne wird der Anteil an noch nicht vollständig umgesetztem Chlorsilan (ca. 500 ppm) durch zusätzliche Aufgabe einer weiteren Menge Methylglykol (≈ 20 kg/h) nachverestert und im Rohprodukt noch gelöste HCl bei Siedetemperatur des Rohprodukts (130 bis 145 °C) über Kopf der Kolonne abgetrieben. Überschüssiges Methylglykol wird über den Kopf der Vorlaufkolonne ausgeschleust und erneut in die Reaktorkolonne eindosiert.

Das desorbierte Rohprodukt verlässt die Vorlaufkolonne über den Sumpfteil und wird nach Abkühlung über mehrere Wärmetauscher in einen Rohproduktbehälter abgepumpt. Der so hergestellte Rohester zeichnet sich durch eine hohe Reinheit und geringe Restacidität aus (Acidität maximal 50 ppm, Siloxangehalt < 3 %, Gehalt an Methylglykol < 5 %, Gehalt an CM > 92 %).

Das Silanester-Rohprodukt wird in einem separaten Rührreaktor durch Zusatz von gasförmigem Ammoniak (gemäß Beispiel 1, Beispiel C) bei Raumtemperatur neutralisiert, bis ein Überschuss an Ammoniak im Rohprodukt erreicht wird, der einem Verbrauch von 5 bis 10 ml 0,1 n HCl (Titration) entspricht. Nach Druckfiltration zur Entfernung des gebildeten Ammoniumchlorids wird das Filtrat mittels diskontinuierlicher oder kontinuierlicher Vakuumdestillation gereinigt.

Man erhält eine Ausbeute von 92 Gew.-%, Farbzahl < 5 APHA, Gehalt an Chlorethoxy-tris-(2-methoxyethoxy)silan < 0,1 % und hydrolysierbarem Chlorid von 9 ppm.

Bei zusätzlicher Zugabe von stöchiometrischen Mengen Natriummethylat-Lösung (bezogen auf gelösten Gehalt an hydrolysierbarem Chlorid) vor Beginn der Destillation kann bei gleicher Ausbeute und GC-Reinheit der Gehalt an hydrolysierbarem Chlorid auf < 1 ppm reduziert werden.

## Patentansprüche

1. Verfahren zur Herstellung von Alkoxysilanen, die arm an acidem Chlorid oder im Wesentlichen frei von acidem Chlorid sind, durch
- Umsetzung von einem Chlorsilan mit einem Alkohol in wasser- und lösemittelfreier Phase und Entfernen von dabei entstehendem Chlorwasserstoff aus der Produktmischung,
- anschließende Zugabe von flüssigem oder gasförmigem Ammoniak, wobei die eingesetzte Menge an Ammoniak, bezogen auf den Anteil an acidem Chlorid, einem stöchiometrischen Überschuss entspricht,
- Behandlung der Ammoniak-haltigen Produktmischung bei einer Temperatur zwischen 10 und 50 °C, gegebenenfalls Abtrennen des bei der Neutralisation entstandenen Salzes vom Rohprodukt und
- Gewinnung des Alkoxysilans durch Destillation des Rohprodukts.

2. Verfahren nach Anspruch 1,
**dadurch gekennzeichnet,**
**dass** man zur Entfernung des bei der Umsetzung von Chlorsilan und Alkohol entstehenden Chlorwasserstoffs fortwährend Alkohol in flüssiger Form zusetzt und einen überschüssigen Anteil des eingesetzten Alkohols über Kopf abzieht.

3. Verfahren nach Anspruch 1 oder 2,
**dadurch gekennzeichnet,**
**dass** man den Ammoniak über ein Tauchrohr einleitet, wobei sich dessen Auslass unterhalb des Flüssigkeitsspiegels der Produktmischung im Reaktionsraum befindet.

4. Verfahren nach mindestens einem der Ansprüche 1 bis 3,
**dadurch gekennzeichnet,**
**dass** man den Ammoniak unter Rühren in die Produktmischung einleitet und das Produktgemisch über 10 Minuten bis 8 Stunden weiterhin gut durchmischt.

5. Verfahren nach Anspruch 4,
**dadurch gekennzeichnet,**
**dass** man die Behandlung der Produktmischung mit Ammoniak bei einem Druck im Bereich von Normaldruck bis hin zu 1,5 bar abs. durchführt.

6. Verfahren nach mindestens einem der Ansprüche 1 bis 5,
**dadurch gekennzeichnet,**
**dass** man das Rohprodukt in die Blase der Destillationskolonne überführt, die im Rohprodukt vorhandene Restmenge an acidem Chlorid bestimmt, dem Rohprodukt eine hierzu äquivalente Mengen an Alkalialkoholat oder Erdalkalialkoholat zugibt, das erhaltene Gemisch unter guter Durchmischung bei einer Temperatur im Bereich von 10 bis 40°C nachbehandelt und anschließend das so nachbehandelte Rohprodukt zur Gewinnung des Alkoxysilans destillativ aufarbeitet.

7. Verfahren nach Anspruch 6,
**dadurch gekennzeichnet,**
**dass** man das Rohprodukt mit Natriummethanolat oder Natriumethanolat nachbehandelt.

8. Verfahren nach mindestens einem der Ansprüche 1 bis 7,
**dadurch gekennzeichnet,**
**dass** man das Verfahren kontinuierlich durchführt.

9. Verfahren nach mindestens einem der Ansprüche 1 bis 8,
**dadurch gekennzeichnet,**
**dass** man als Alkohol Methanol, Ethanol, n-Propanol, i-Propanol, Methylglykol, Ethylglykol oder eine Mischung aus mindestens zwei der zuvor genannten Alkohole einsetzt.

10. Verfahren nach mindestens einem der Ansprüche 1 bis 9,
**dadurch gekennzeichnet,**
**dass** das Alkoxysilan der nachfolgenden allgemeinen Formel I oder II genügt, 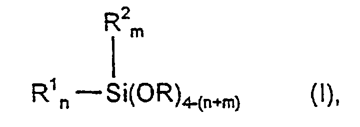 wobei
R eine lineare oder verzweigte Alkylgruppe mit 1 bis 4 C-Atomen oder eine Glykolethereinheit gemäß der Formel -[(CH₂)_{y}-O]_{z}-R³ darstellt, worin y gleich 2, 4, 6 oder 8, z gleich 1, 2, 3 oder 4 und R³ eine lineare oder verzweigte Alkylgruppe mit 1 bis 8 C-Atomen sind,
R¹ eine lineare, verzweigte oder cyclische Alkylgruppe mit 1 bis 20 C-Atomen oder eine lineare, verzweigte oder cyclische Chloralkylgruppe mit 1 bis 20 C-Atomen oder eine lineare, verzweigte oder cyclische Alkenylgruppe mit 2 bis 10 C-Atomen bedeutet,
R² eine lineare oder verzweigte Alkylgruppe mit 1 bis 4 C-Atomen darstellt,
n gleich 0 oder 1 oder 2 ist, m gleich 0 oder 1 und (n+m) gleich 1 oder 2 oder 3 sind,
sowie
Si(OR⁴)₄ (II),
wobei
R⁴ eine lineare oder verzweigte Alkylgruppe mit 1 bis 8 C-Atomen oder eine Glykolethereinheit gemäß der Formel -[(CH₂)_{y}-O]_{z}-R⁵ darstellt, worin y gleich 2, 4, 6 oder 8, z gleich 1, 2, 3 oder 4 und R⁵ eine lineare oder verzweigte Alkylgruppe mit 1 bis 8 C-Atomen sind.

## Claims

1. A process for preparing an alkoxysilane which is low in acidic chloride or essentially free from acidic chloride, by
- reacting a chlorosilane with an alcohol in a water-free and solvent-free phase with removal of the resultant hydrogen chloride from the product mixture,
- then adding liquid or gaseous ammonia, with the amount of ammonia employed, based on the content of acidic chloride, corresponding to a stoichiometric excess,
- treating the ammonia-containing product mixture at a temperature of from 10 to 50°C, and if desired then separating off the salt formed in the course of neutralization from the crude product, and
- recovering the alkoxysilane by distilling the crude product.

2. A process according to claim 1, **characterized in that**, in order to remove the hydrogen chloride resulting from the reaction of chlorosilane and alcohol, alcohol in liquid form is added continuously, and an excess fraction of the alcohol employed is taken off from the top.

3. A process according to claim 1 or 2, **characterized in that** the ammonia is introduced via a dip pipe whose outlet is located below the liquid level of the product mixture in the reaction chamber.

4. A process according to at least one of claims 1 to 3, **characterized in that** the ammonia is introduced into the product mixture with stirring and the product mixture is subsequently mixed thoroughly for from 10 minutes to 8 hours.

5. A process according to claim 4, **characterized in that** the treatment of the product mixture with ammonia is carried out at a pressure in the range from atmospheric pressure to 1.5 bar abs.

6. A process according to at least one of claims 1 to 5, **characterized in that** the crude product is transferred to the still of the distillation column, the residual amount of acidic chloride present in the crude product is determined, an amount of alkali metal alcoholate or alkaline earth metal alcoholate equivalent to this is added to the crude product, the resultant mixture is aftertreated with thorough mixing at a temperature in the range from 10 to 40°C and then the crude product thus aftertreated is worked up by distillation in order to give the alkoxysilane.

7. A process according to claim 6, **characterized in that** the crude product is aftertreated with sodium methanolate or sodium ethanolate.

8. A process according to at least one of claims 1 to 7, **characterized in that** the process is carried out continuously.

9. A process according to at least one of claims 1 to 8, **characterized in that** methanol, ethanol, n-propanol, isopropanol, methylglycol, ethylglycol or a mixture of at. least two of the abovementioned alcohols is used as alcohol.

10. A process according to at least one of claims 1 to 9, **characterized in that** the alkoxysilane is of the following general formula I or II 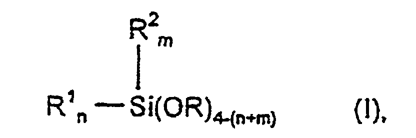 where
R is a linear or branched alkyl group having 1 to 4 carbon atoms or a glycol ether unit of the formula -[(CH₂)_{y}-O]_{z}-R³, in which
y is 2, 4, 6 or 8, z is 1, 2, 3 or 4 and R³ is a linear or branched alkyl group having 1 to 8 carbon atoms,
R¹ is a linear, branched or cyclic alkyl group having 1 to 20 carbon atoms or a linear, branched or cyclic chloroalkyl group having 1 to 20 carbon atoms or a linear, branched or cyclic alkenyl group having 2 to 10 carbon atoms,
R² is a linear or branched alkyl group having 1 to 4 carbon atoms,
n is 0 or 1 or 2, m is 0 or 1 and (n + m) is 1 or 2 or 3,
and
Si(OR⁴)₄ (II),
where
R⁴ is a linear or branched alkyl group having 1 to 8 carbon atoms or a glycol ether unit of the formula -[(CH₂)_{y}-O]_{z}-R⁵ in which
y is 2, 4, 6 or 8, z is 1, 2, 3 or 4 and R⁵ is a linear or branched alkyl group having 1 to 8 carbon atoms.

## Revendications

1. Procédé de préparation d'alcoxysilanes à faible teneur en chlorure acide ou essentiellement exempts de chlorure acide, par :
- réaction d'un chlorosilane avec un alcool dans une phase exempte d'eau et de solvant et élimination de l'acide chlorhydrique ainsi formé, du mélange de produits,
- addition subséquente d'ammoniac liquide ou gazeux, la quantité d'ammoniac utilisée, rapporté à la fraction chlorure acide, correspondant à un excès stoechiométrique,
- traitement du mélange de produits contenant de l'ammoniac à une température se situant entre 10 et 50°C, le cas échéant séparation du sel formé au cours de la neutralisation du produit brut, et
- récupération de l'alcoxysilane par distillation du produit brut.

2. Procédé selon la revendication 1,
**caractérisé en ce qu'**
on ajoute en continu de l'alcool sous forme liquide pour éliminer l'acide chlorhydrique formé au cours de la réaction du chlorosilane et de l'alcool, et on sépare en tête une fraction en excès de l'alcool utilisé

3. Procédé selon la revendication 1 ou 2,
**caractérisé en ce qu'**
on introduit l'ammoniac par un tube plongeant dont l'extrémité débouche en dessous du niveau de liquide du mélange de produits dans l'espace réactionnel.

4. Procédé selon au moins une des revendications 1 à 3,
**caractérisé en ce qu'**
on introduit l'ammoniac sous agitation dans le mélange de produits et on brasse bien le mélange de produits pendant 10 minutes à 8 heures.

5. Procédé selon la revendication 4,
**caractérisé en ce qu'**
on effectue le traitement du mélange de produits avec de l'ammoniac sous une pression se situant dans une plage allant de la pression normale jusqu'à 1,5 bar absolu.

6. Procédé selon au moins une des revendications 1 à 5,
**caractérisé en ce qu'**
on transfère le produit brut dans la cuve de la colonne de distillation, on détermine la quantité résiduelle de chlorure acide présente dans le produit brut, on ajoute au produit brut une quantité équivalente à celle-ci d'alcoolate alcalin ou d'alcoolate alcalino-terreux, on traite le mélange obtenu sous un bon brassage à une température se situant dans une plage de 10 à 40°C, et ensuite on soumet à une distillation le produit brut ainsi traité pour récupérer l'alcoxysilane.

7. Procédé selon la revendication 6,
**caractérisé en ce qu'**
on traite le produit brut avec du méthanolate de sodium ou de l'éthanolate de sodium.

8. Procédé selon au moins une des revendications 1 à 7,
**caractérisé en ce qu'**
on met en oeuvre le procédé en continu.

9. Procédé selon au moins une des revendications 1 à 8,
**caractérisé en ce qu'**
on utilise comme alcool le méthanol, l'éthanol, le n-propanol, le i-propanol, le méthylglycol, l'éthylglycol, ou un mélange d'au moins deux des alcools précédemment cités.

10. Procédé selon au moins une des revendications 1 à 9,
**caractérisé en ce que**
l'alcoxysilane répond à la formule générale I ou II ci-après : 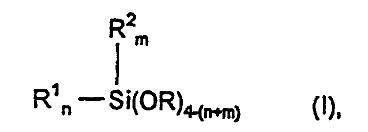 dans laquelle
R représente un groupe alkyle linéaire ou ramifié comportant de 1 à 4 atome(s) de carbone, ou une unité d'éther de glycol selon la formule -[(CH₂)_{y}-O]_{z}-R³ avec
y égal à 2, 4, 6 ou 8, z égal à 1, 2, 3 ou 4 et R³ représente un groupe alkyle linéaire ou ramifié comportant de 1 à 8 atome(s) de carbone,
R¹ représente un groupe alkyle linéaire, ramifié ou cyclique, comportant de 1 à 20 atome(s) de carbone ou un groupe chloroalkyle linéaire, ramifié ou cyclique comportant de 1 à 20 atome(s) de carbone, ou un groupe alcényle linéaire, ramifié ou cyclique comportant de 2 à 10 atomes de carbone,
R² représente un groupe alkyle linéaire ou ramifié comportant de 1 à 4 atome(s) de carbone,
n est égal à 0 ou 1, ou 2, m est égal à 0 ou 1, et (n+m) est égal à 1 ou 2 ou 3,
Si(OR⁴)₄ (II),
dans laquelle
R⁴ représente un groupe alkyle linéaire ou ramifié comportant de 1 à 8 atome(s) de carbone ou une unité d'éther de glycol selon la formule -[(CH₂)_{y}-O]_{z}-R⁵, avec
y égal à 2, 4, 6 ou 8, z égal à 1, 2, 3 ou 4 et R⁵ représente un groupe alkyle linéaire ou ramifié de 1 à 8 atome(s) de carbone.
